Europäisches Patentamt

European Patent Office

Office européen des brevets

(11) Publication number: **0 518 311 A2**

# EUROPEAN PATENT APPLICATION

(21) Application number: **92109810.9**

(22) Date of filing: **11.06.92**

(51) Int. Cl.⁵: **G06F 15/40**

(30) Priority: **12.06.91 JP 140006/91**

(43) Date of publication of application:
**16.12.92 Bulletin 92/51**

(84) Designated Contracting States:
**DE FR GB**

(71) Applicant: **HITACHI, LTD.**
**6, Kanda Surugadai 4-chome**
**Chiyoda-ku, Tokyo 100(JP)**

(72) Inventor: **Ito, Hidenori**
**123, Toriimatsucho-1-chome**
**Kasugai-shi(JP)**
Inventor: **Suzuki, Hitoshi**
**26, Kitahonjigaharacho-1-chome**
**Owariasahi-shi(JP)**
Inventor: **Iwamoto, Shoji**
**100-14-11-104, Midorichomidorigaoka**
**Owariasahi-shi(JP)**
Inventor: **Orimo, Masayuki**
**1-1-510, Hakusan-5-chome, Asao-ku**
**Kawasaki-shi(JP)**
Inventor: **Mori, Kinji**
**15-18, Kanai-1-chome**
**Machida-shi(JP)**
Inventor: **Hirasawa, Shigeki**
**17-12-A-507, Yutakacho**
**Sagamihara-shi(JP)**
Inventor: **Fujise, Hiroshi**
**1553-1-L-808, Shinanocho, Totsuka-ku**
**Yokohama-shi(JP)**
Inventor: **Takeuchi, Masuyuki**
**Shiroyama 7-102, 4589, Oba**
**Fujisawa-shi(JP)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) **File store method, file access method, and distributed processing system using such methods.**

(57) A method of storing a file in a distributed processing system having a plurality of data processing units (10, 20) with storage units (11 - 22), the data processing units being interconnected by a transmission medium (LAN), wherein a file having a set of data is divided in accordance with a physical minimum file division unit, and stored in the storage units. At least one of the data processing units is provided with a memory unit (file management table) (15, 25) for storing correspondence information between a logical store position of data of the file recognized by a program running on the distributed processing system, and a physical store position of the data actually stored in the storage unit.

FIG. I

## BACKGROUND OF THE INVENTION

### FIELD OF THE INVENTION

The present invention relates to a file store method, file access method, and distributed processing system using such methods. More particularly, the present invention relates to a file store method and file access method, to be used in a distributed processing system having a plurality of data processing units capable of efficient parallel processing and system extension.

### DESCRIPTION OF THE RELATED ART

As the amount of data to be processed increases in a computer system, this system is changed to a distributed processing system such as a multi computer system by using a plurality of data processing units (hereinafter called "DPU"). In this manner, the increased amount of data can be processed by a plurality of DPUs in parallel, while improving the system performance.

It is essential in this case that the system can be easily extended without requiring complicated operations when DPUs are increased in number.

The following two approaches have been proposed in allocating a file to a plurality of file storage units connected to DPUs.

(1) One approach is a method of multiplexing a file to store the same contents of the file in different file storage units. This method is disclosed, for example, in JP-A-3-92942.

(2) The other approach is a method which uses a distributed relational database, wherein a number of files distributed in file storage units of different DPUs are arranged to be recognized as a single file (called "virtual file"), to thereby facilitate development of application programs.

### SUMMARY OF THE INVENTION

Of the two conventional approaches, the former file multiplexing approach is basically a technique dealing with failure of file storage units, and does not consider therefore an improvement on system performance through parallel processing and feasibility of system extension.

The latter distributed relational data base approach has a possibility of improving the processing performance such that DPUs process in parallel their own data of each file constituting the virtual file. This approach does not also consider feasibility of system extension from the following reasons. If additional DPUs are to be provided in order to take partial charge of data processing, files of the already existing DPU are distributed to the additional DPUs, requiring a complicated work. Furthermore, a file cannot be divided more than the number of original files constituting the virtual file, so that this approach is not applicable to the system having DPUs more than that number.

It is therefore an object of the present invention to solve the above-described problems of the related art, and provide a file store method, file access method, and distributed processing system using such methods, capable of efficient data processing and easy system extending, in a distributed processing system.

According to an aspect of the present invention, a method of storing a file in a distributed processing system having a plurality of data processing units with storage units, the data processing units being interconnected by a transmission medium, includes the step of dividing a file having a set of data in accordance with a physical minimum file division unit, and storing the divided file in the storage units.

According to an example of the present invention, at least one of the data processing units is provided with a memory unit (e.g., a file management table) for storing correspondence information between a logical store position of data of the file recognized by a program running on the distributed processing system, and a physical store position of the data actually stored in the storage unit.

Using a file store method of the present invention, each file is divided into extents each having at least one block and stored in file storage devices of DPUs of the distributed system. As a result, a file store method can be provided which has an ability to expand the system and process files efficiently.

Each DPU in a preferred form has a memory unit (file management table) storing information of extents of all storage media. As a result, the logical block number of each file can be related to a physical block number.

According to an example of a file access method of the present invention, upon reception of a file access request, each DPU having files checks from its file management table whether the requested file is present in its own storage unit. If present, a file access process is executed, and if not present, the request is discarded or a notice indicating that the file is not present is sent back, to thereafter prepare for reception of the next access request. In this manner, DPUs in the system can execute different processings in parallel. It is also possible to increase the number of DPUs and improve the system performance.

### BRIEF DESCRIPTION OF THE DRAWINGS

Fig. 1 shows an example of the structure of a distributed data processing system, applied to which are a method of storing a file and a method of accessing a file according to a first embodiment of the present invention;

Fig. 2A is a diagram showing an example of file division used with the embodiment shown in Fig. 1;

Fig. 2B is a diagram showing conventional file allocation to a memory;

Fig. 2C is a diagram showing another example of file allocation to discs according to an embodiment of the present invention;

Fig. 3 shows an example of a file management table provided in a DPU shown in Fig. 1;

Fig. 4 is a flow chart showing an example of processes to be executed by the DPU of the embodiment shown in Fig. 1;

Fig. 5 shows an example of a file management table provided in a DPU according to another embodiment of the present invention;

Fig. 6 shows an example of the arrangement of a distributed processing system according to another embodiment of the present invention;

Fig. 7 is a flow chart showing an example of processes to be executed by the main DPU of the embodiment shown in Fig. 6; and

Fig. 8 is a flow chart showing an example of processes to be executed by a sub DPU of the embodiment shown in Fig. 6.

DESCRIPTION OF THE PREFERRED EMBODIMENTS

Preferred embodiments of the present invention will be described in detail with reference to the accompanying drawings.

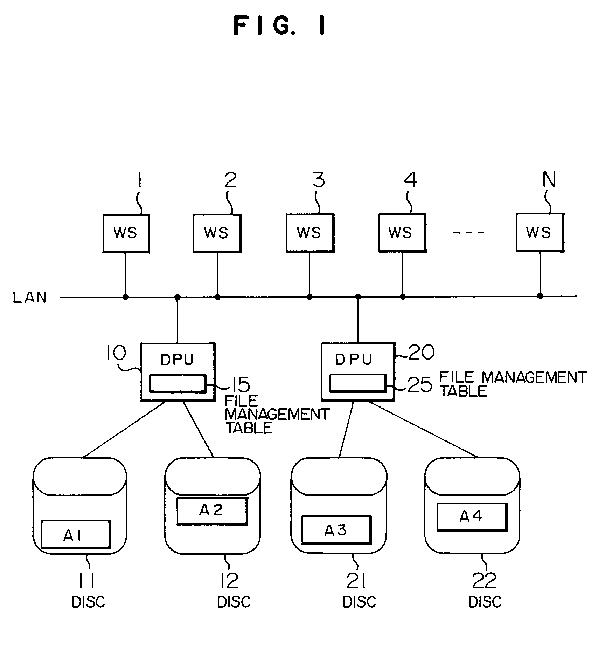

Fig. 1 shows an example of the structure of a distributed data processing system, applied to which are a method of storing a file and a method of accessing a file according to the first embodiment of the present invention. In Fig. 1, this system has a plurality of DPUs, e.g., two DPUs 10 and 20, at least one memory, e.g., two memories such as fixed or hard disc devices 11 and 12 (hereinafter simply called disc) connected to the DPU 10, and at least one memory, e.g., two memories such as discs 21 and 22 connected to DPU 20. Each DPU 10, 20 is connected to N (N is an integer not less than one) workstations (WS) 1 to N via a transmission medium such as a local area network (LAN).

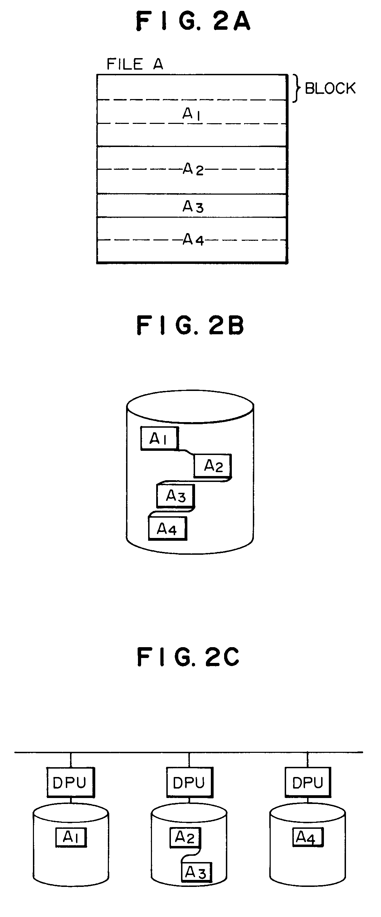

In this embodiment, a file A is divided, for example, into four extents $A_1$, $A_2$, $A_3$ and $A_4$ as shown in Fig. 2A, each extent being assigned to at least one block or two or more consecutive blocks. A block is a physical minimum unit of file division. In this example, the file A is divided into four extents $A_1$, $A_2$, $A_3$ and $A_4$ which are stored in the discs 11, 12, 21 and 22, respectively.

Extents $A_1$ to $A_4$ have been stored discretely in different blocks of one memory (e.g., disc) as shown in Fig. 2B.

Storing a file as shown in Fig. 1 is only an illustrative purpose, and it may be stored for example as shown in Fig. 2C.

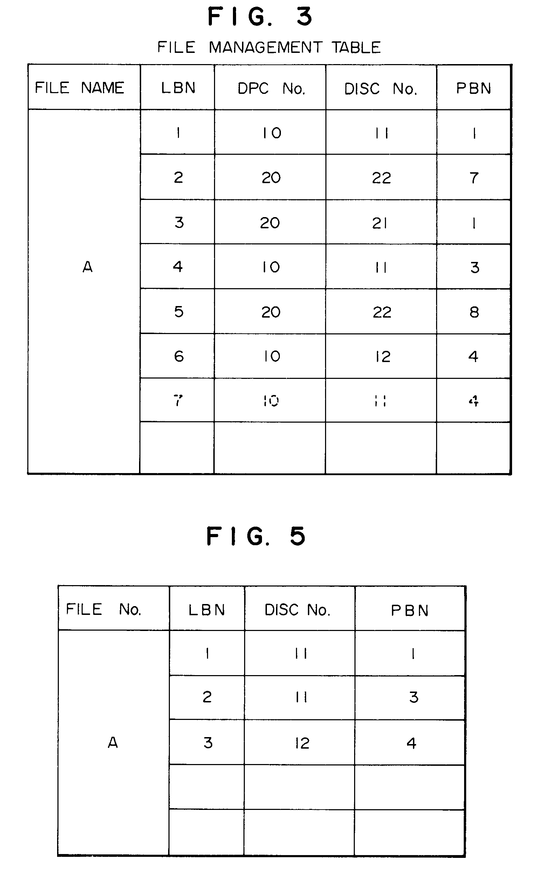

Each DPU has a central processing unit (CPU), a random access memory (RAM), a read-only memory (ROM), and the like. Each DPU 10, 20 also has another memory, e.g., a file management table 15, 25 such as shown in Fig. 3. The file management table stores correspondence information between a logical store position, e.g., logical block number (LBN), a DPU number, a disc number and a physical store position, e.g., physical block number (PBN), respectively for all data of the file A. The logical position is a data store position recognized by an application program, and the correspondence information indicates at which block, which disc and DPU, data is being stored. For example, it can be known from this table that the data having LBN = 1 is being stored in the disk 11 connected to DPU 10 at the physical block No. 1.

A description will be given below for a method of accessing a file in the distributed processing system of this embodiment constructed as shown in Figs. 1 and 3.

Consider that an application program running on a workstation requests an access to some record on the file A. First, the workstation broadcasts a file access request message to the network. Described in this file access request message are information representing that this message is an access request message to the file A, information representing the type of access (one of data retrieval, overwrite, and addition), information regarding the access (contents of overwrite or addition, and other information), and the access requesting workstation number.

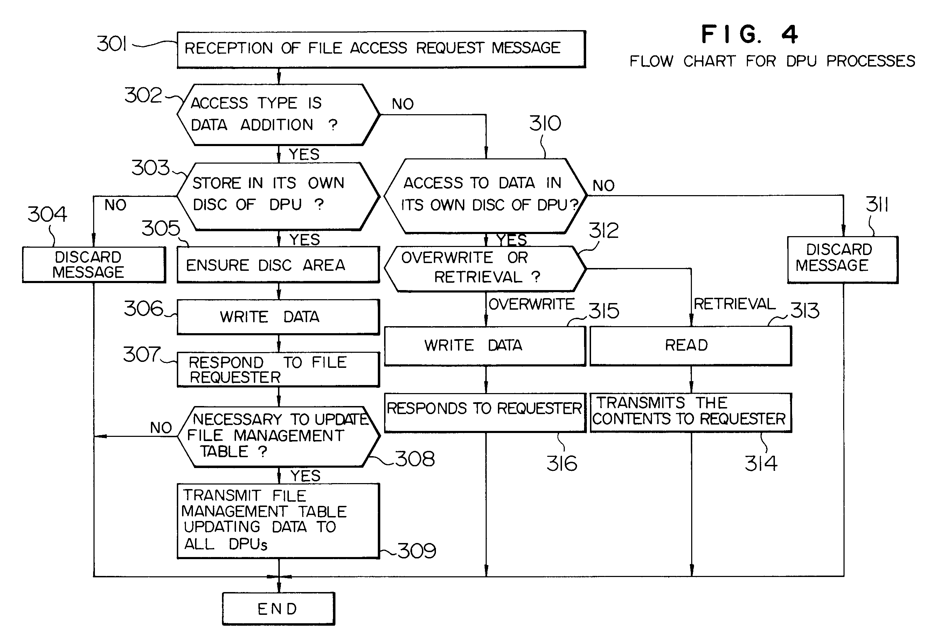

The operation of the operating system of each DPU 10, 20 when receiving the file access request message will be described with reference to the flow chart shown in Fig. 4. Upon reception of the file access request message (step 301), each DPU checks from the type of access described in the message whether the access request is data addition (step 302). In the case of the data addition, each DPU judges from a predetermined algorithm whether the data is stored in its own disc or a disc connected to another DPU (step 303). In the case of the latter judgment, the message is discarded (step 304). In the case of the former judgment, an area of its own disk to which the data is added is secured (step 305), and the data is written in this area (step 306) to complete the data addition operation.

The algorithm determining the disc in which data is stored, will be later detailed.

When the data was added, a response message representing a data addition operation completion is transmitted to the access requesting workstation (step 307). It is also judged whether the file management tables are required to be updated because of the data addition (step 308).

If updating is necessary, file management table updating data is transmitted to all other DPUs (step 309). The algorithm determining a necessity of updating the file management tables will be later described when describing the algorithm determining the disc in which data is stored.

If the type of access is not data addition at the judgment step 302, it is checked from the logical block number (LBN) and DPU number in its own file management table, whether the logical block containing a record requested to access is present in its own disk (step 310). If it is judged as not present, the message is discarded (step 311), and if it is judged as present, the following steps are executed.

If a record requested to access is present in its own disk, it is then checked whether the type of access is data retrieval or overwrite (step 312). In the case of data retrieval, the access requested record is read from the disc (step 313), and the contents of the record is transmitted back to the access requesting workstation (step 314). In the case of data overwrite, the overwrite contents are written to the access requested record (step 315), and a response message representing a data overwrite completion report is transmitted to the access requesting workstation (step 316). In the above manner, each DPU terminates the operation which has been executed upon reception of a data retrieval or overwrite request.

In this embodiment, the operation upon reception of an access request performs the above-described processes. Each DPU can discard a file access request message basing upon a judgment by the store algorithm or a reference to the file management table, thereby allowing each CPU to receive and process the next file access request message. It is therefore possible for DPUs 10 and 20 to access different files at the same time, namely, to perform parallel processing.

The data store disk determining algorithm and file management table updating algorithm respectively used by each DPU when adding data, will be described.

A data addition request makes an issue of to which disk of which DPU the data is added. There are various types of algorithms solving this issue. Some of them realizing parallel processing efficiently will be described.

(1) When a data addition request is received for the file A, a data addition area is ensured at the position next to the already written record of the file A within blocks storing extents of the file A, if there is any block containing such an area allowing to add a record.

If such a block is not present, a disk having the largest number of empty blocks is identified from the file management table (i.e., disk number and PBN), to ensure an area on the empty blocks of the identified disc.

In order to deal with the case where all discs have the same number of empty blocks, the priority order of all discs of all DPUs is provided to unambiguously identify one disc with the highest priority order and write data in the identified disc.

If data is added sequentially following this algorithm, there is one block at most, if any, which has data partially written and an area for writing an additional record. When the whole area of the block is completely filled with added data and there is no area to add a record, DPU carried out such a data addition operation transmits file management table updating data to other DPUs, the updating data including LBN, DPU number, disc number and PBN, respectively of the block to which the data was added.

The other DPUs receiving this updating data update their own file management tables. For example, assuming that the whole area of the physical block No. 4 of the disc 11 connected to DPU 10 is filled with added data, DPU 10 transmits to the other DPU 20 the updating data containing LBN = 7, DPU number = 10, disc number = 11, and PBN = 4. The table contents of each DPU 10, 20 are therefore updated as indicated by broken line numbers shown in Fig. 3.

Upon reception of a new data addition request, each DPU can unambiguously identify by itself a disc in which addition data is to be stored, by referring to the updated file management table and following the above-described algorithm.

(2) According to the algorithm (1) described above, the disc in which addition data is to be stored is a disc having the largest number of empty blocks. Instead, the disc may be a disk having a smallest access occurrence frequency. The access occurrence frequency can be judged from the use factor of a disc controller. If other algorithm parameters are made same as the algorithm (1), a disc in which addition data is to be stored can be unambiguously identified. Similar to the algorithm (1), this algorithm (2) operates to transmit file management table updating data when necessary, to thereby update file management tables.

(3) If the amount of expected addition data is small to the extent that a load of a particular disc in which the addition data is to be stored, will not become large, then the addition data may be stored in only one particular disc so long as there arises no performance difference between DPUs.

Using one of the algorithms (1), (2) and (3), a disk for data addition is identified and the file management tables are supervised.

If the number of DPUs and discs are increased in the above-described system which deals with a file access request by the above-described file access method, the following procedure is performed. Namely, a new DPU or DPUs are provided with copies of file management tables of other DPUs, to supply the information of other DPUs to the new DPU or DPUs. In this manner, a new system becomes operable without changing application programs of workstations and without changing the contents of already existing files.

The number of DPUs and discs to be increased can be set as desired. The number of workstations to be increased can be set freely. A plurality number of files may be stored.

Another embodiment of the present invention will be described.

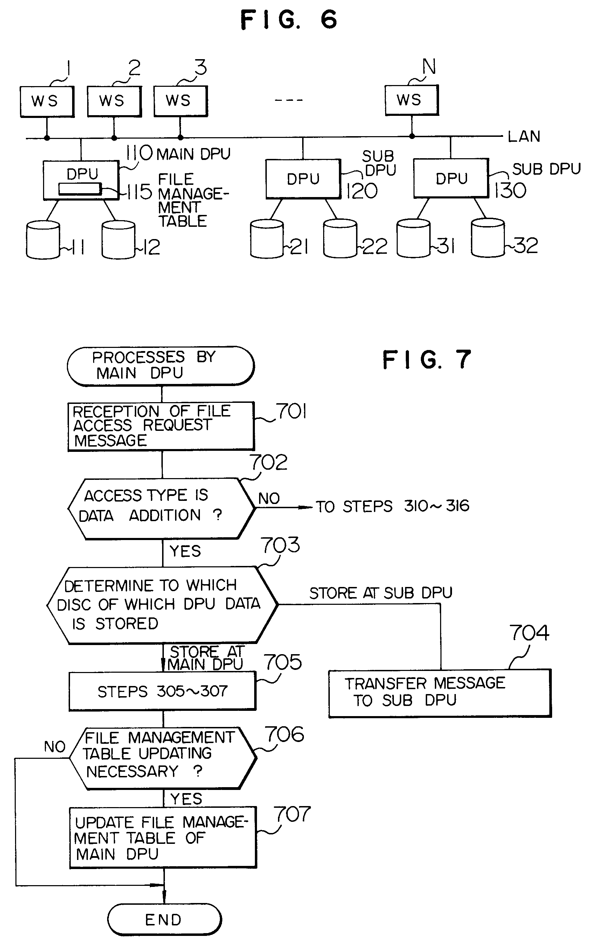

In the first embodiment, each DPU has a file management table storing correspondence information between a logical block number (LBN), a DPU number, a disc number and a physical block number (PBN), respectively for all data of the file A. In the second embodiment, each DPU has a file management table storing data regarding discs connected only to its own DPU. The other structure is the same shown in Fig. 1, so the drawing of this embodiment system is omitted. For example, DPU 10 has a file management table such as shown in Fig. 5.

The file access method of this embodiment is different from that of the first embodiment in the following points. In this embodiment, in the data addition operation responsive to a file access request, each DPU has initially no data allocation information of blocks of discs connected to other DPUs, and cannot make a judgment without this information. Therefore, in order to determine a DPU which performs the data addition operation, basing upon the data allocation information of respective DPUs, it is necessary to exchange such information between DPUs in advance and have a consensus of all DPUs as to unanimously identification of a DPU performing the data addition operation.

Specifically, a process of receiving information of file management tables of other DPUs is provided between the steps 302 and 303 shown in Fig. 4. In accordance with the received information and the information of its own file management table, each DPU executes the step 303. The step 309 shown in Fig. 4 is not necessary.

With the above procedure, it is possible to execute parallel processing of file accesses by a plurality of DPUs and expand the system, like the manner described with the first embodiment.

The third embodiment of the present invention will be described. In this embodiment, only a particular DPU has a file management table, and this DPU responds to a file access request and passes it to another CPU.

Fig. 6 shows an example of the system arrangement of this embodiment. Elements having identical reference numerals to those shown in Fig. 1 have similar functions described with Fig. 1. DPU 110 is a main DPU having a file management table 115. DPUs 120 and 130 are sub DPUs without a file management table. The table 115 stores data regarding all discs 11, 12, 21, 22, 31 and 32 of all DPUs.

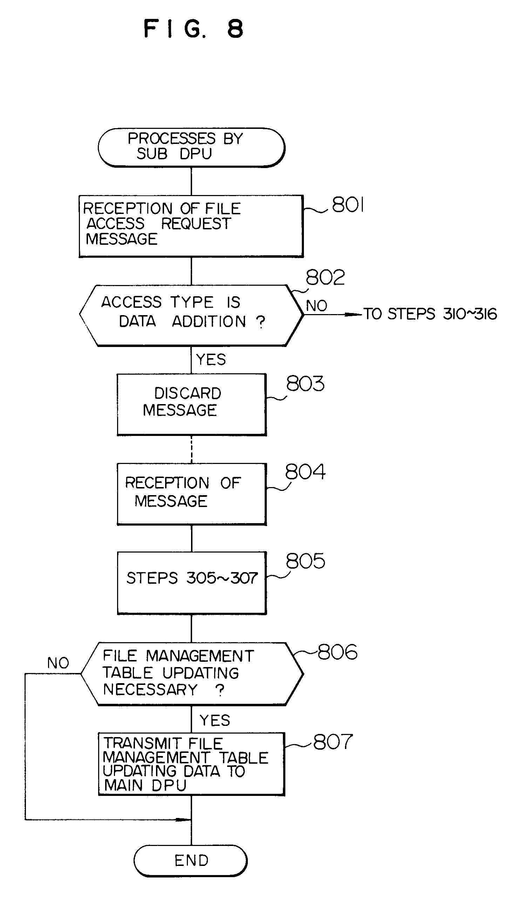

An illustrative operation of this embodiment will be described with reference to the flow charts shown in Figs. 7 and 8. Fig. 7 shows the processes to be executed by the main DPU 110. Referring to Fig. 7, upon reception of a file access request message from a workstation (step 701), the main DPU 110 judges from the type of access described in the message, whether the access request is a data addition request (step 702). If not, the steps 310 to 316 shown in Fig. 4 are executed. If data addition request, the main DPU 110 judges using a predetermined one of the above-described algorithms, to which disc of which DPU the addition data is stored (step 703).

If it is judged that the addition data is to be stored in a disc of a certain sub DPU, the request message is transferred to this sub DPU (step 704).

If it is judged that the addition data is to be stored in its own disc, the steps 305 to 307 shown in Fig. 4 are executed using the information of the received message (step 705).

It is also judged whether the data addition has necessitated to update the file management table 115 (step 706). If updating is necessary, the table 115 is updated (step 707).

The processes to be executed by each sub DPU are shown in Fig. 8.

Referring to Fig. 8, upon reception of a file access request message (step 801), each sub DPU 120, 130 first judges from the type of access described in the message, whether the access request is a data addition request (step 802). If not, the steps 310 to 316 shown in Fig. 4 are executed. If data addition request, the message is discarded (step 803).

If the access request is a data addition request to a disc of a sub DPU, the main DPU transfers the access request to the sub DPU, and this sub DPU receives it (step 804).

Next, in accordance with the message, the steps 305 to 307 shown in Fig. 4 are executed (step 805).

It is also judged whether the data addition has necessitated to update the file management table 115 (step 806). If updating is necessary, file management table updating data is transmitted to the main DPU 110 (step 807).

In the above embodiments, each workstation has application programs. Instead, each DPU may have application programs and issue by itself a file access request. In this case, it is first checked whether the file access request message issued by DPU itself is an access request to its own disc. If Yes, an access to the disc is performed. If No, the file access request message is broadcast to other DPUs to cause one of DPUs to perform a disc access operation.

Alternatively, the similar processes are also executed if a workstation is directly connected to a DPU and has application programs.

In the above embodiments, the file access request message is broadcast from a workstation to LAN. The present invention is applicable to message transmission other than broadcasting. Interconnection of workstations and DPUs may be realized by busses other than LAN.

Needless to say, the file storage medium is not limited to hard discs, but other medium such as flexible discs, magnetic tapes, CPU memories may also be used. In the above embodiments, although the file access request is executed in units of record number. Instead, other access unit such as key, block, address or the like may be used.

As described so far, in the file store method of the present invention, each file is stored in division as extents each having at least one block, in file storage media of DPUs of the distributed processing system. As a result, a file store method can be provided which has an ability to expand the system and process files efficiently.

Each DPU in a preferred form has a file management table storing information of extents of all storage media. As a result, the logical block number of each file can be related to a physical block number.

**Claims**

1.  A method of storing a file in a distributed processing system having a plurality of data processing units (10, 20) with storage units (11 - 22), said data processing units being interconnected by a transmission medium (LAN), comprising the step of:
    dividing a file having a set of data, in accordance with a physical minimum file division unit, and storing the divided file into said storage units.

2.  A method of storing a file according to Claim 1, wherein each said data processing unit has at least one said storage unit.

3.  A method of storing a file according to Claim 1, further comprising the step of:
    providing each said data processing unit with storage means (15, 25) for storing correspondence information between a logical store position of data of said file recognized by a program running on said distributed processing system, and a physical store position of said data actually stored in each said storage unit.

4.  A method of storing a file according to Claim 3, wherein said storage means stores information of the data stored only in said storage unit connected to a corresponding one of said data processing units.

5.  A method of storing a file according to Claim 1, further comprising the step of:
    providing one of said data processing units with storage means (115) for storing correspondence information between a logical store position of data of said file recognized by a program running on said distributed processing system, and a physical store position of said data actually stored in each said storage unit.

6.  A method of accessing a file in a distributed processing system having a plurality of data processing units (10, 20) with storage units (11 - 22), said data processing units being interconnected by a transmission medium (LAN), comprising the steps of:
    dividing a file having a set of data, in accordance with a physical minimum file division unit, and storing said divided file into said storage units;
    providing each said data processing unit with storage means (15, 25) for storing correspondence information between a logical store position of data of said file recognized by a program running on said distributed processing system, and a physical store position of said data actually stored in each said storage unit; and
    accessing one of said storage units upon reception of an access request to said file, in accordance with the information in said storage means.

7.  A method of accessing a file according to Claim 6, wherein:
    said physical minimum file division unit is a block; and

if said access request is a data addition request, said accessing step writes said to be added, in an empty block of one of said storage units having the largest number of empty blocks.

8. A method of accessing a file according to Claim 6, wherein:

said physical minimum file division unit is a block; and

said accessing step includes a step of, if said access request is a data addition request, writing said data to be added, in an empty block of one of said storage units, and

a step of, when said empty block in which said data to be added having been written has no empty area, updating the information in said storage means.

9. A method of accessing a file in a distributed processing system having a plurality of data processing units (10, 20) with storage units (11 - 22), said data processing units being interconnected by a transmission medium (LAN), comprising the steps of:

dividing a file having a set of data, in accordance with a physical minimum file division unit, and storing said divided file into said storage units; and

when there is a request of writing addition data in said file, writing said addition data in one of said storage units.

10. A method of accessing a file according to Claim 9, wherein said physical minimum file division unit is a block.

11. A method of accessing a file according to Claim 10, wherein said writing step writes said addition data in one of the blocks of said storage units, said one block storing said file and having an area capable of writing additional data.

12. A method of accessing a file according to Claim 10, wherein said writing step writes said addition data in an empty block of one of said storage units having the largest number of empty blocks.

13. A method of accessing a file according to Claim 10, wherein said writing step writes said addition data in one of said storage units in accordance with a priority order.

14. A method of accessing a file according to Claim 10, wherein said writing step writes said addition data in one of said storage units having a smallest access occurrence frequency.

15. A method of accessing a file according to Claim 10, wherein said writing step writes said addition data in a predetermined one of said storage units.

16. A distributed processing system comprising:

a plurality of data processing units (10, 20) with storage units (11 - 22), said data processing units being interconnected by a transmission medium (LAN); and

said storage units storing a file having a set of data and divided in accordance with a physical minimum file division unit.

17. A distributed processing system according to Claim 16, further comprising:

storage means (15, 25) provided to at least one of said data processing units, for storing correspondence information between a logical store position of data of said file recognized by a program running on said distributed processing system, and a physical store position of said data actually stored in each said storage unit.

18. A distributed processing system comprising:

a plurality of data processing units (10, 20) with storage units (11 - 22), said data processing units being interconnected by a transmission medium (LAN);

said storage units storing a file having a set of data and divided in accordance with a physical minimum file division unit; and

storage means (15, 25) provided to at least one of said data processing units, for storing correspondence information between a logical store position of data of said file recognized by a program running on said distributed processing system, and a physical store position of said data actually stored in each said storage unit,

wherein each said data processing unit has means for accessing one of said storage units upon reception of an access request to said file, in accordance with the information in said storage means.

19. A distributed processing system comprising:

a plurality of data processing units (10, 20) with storage units (11 - 22), said data processing units being interconnected by a transmission medium (LAN); and

said storage units storing a file having a set of data and divided in accordance with a physical minimum file division unit,

wherein each said data processing unit has means for accessing one of said storage units in accordance with the information in said storage means, when there is a request of accessing to said file.

# F I G. 1

1     2     3     4         N

| WS | WS | WS | WS | - - - | WS |

LAN

10 — DPU         DPU — 20

15   FILE MANAGEMENT TABLE       25   FILE MANAGEMENT TABLE

A1     A2     A3     A4

11     12     21     22

DISC     DISC     DISC     DISC

9

# F I G. 2A

FILE A

} BLOCK

$A_1$

$A_2$

$A_3$

$A_4$

# F I G. 2B

# F I G. 2C

# F I G. 3

FILE MANAGEMENT TABLE

| FILE NAME | LBN | DPC No. | DISC No. | PBN |
|---|---|---|---|---|
| | 1 | 10 | 11 | 1 |
| | 2 | 20 | 22 | 7 |
| | 3 | 20 | 21 | 1 |
| A | 4 | 10 | 11 | 3 |
| | 5 | 20 | 22 | 8 |
| | 6 | 10 | 12 | 4 |
| | 7 | 10 | 11 | 4 |
| | | | | |

# F I G. 5

| FILE No. | LBN | DISC No. | PBN |
|---|---|---|---|
| | 1 | 11 | 1 |
| | 2 | 11 | 3 |
| A | 3 | 12 | 4 |
| | | | |
| | | | |

11

301 — RECEPTION OF FILE ACCESS REQUEST MESSAGE

302 — ACCESS TYPE IS DATA ADDITION ? — NO

310

YES

303 — STORE IN ITS OWN DISC OF DPU ? — NO

ACCESS TO DATA IN ITS OWN DISC OF DPU? — NO

304

305

311

YES

312

DISCARD MESSAGE

ENSURE DISC AREA

OVERWRITE OR RETRIEVAL ?

DISCARD MESSAGE

306 — WRITE DATA

OVERWRITE 315

RETRIEVAL 313

307 — RESPOND TO FILE REQUESTER

WRITE DATA

READ

NECESSARY TO UPDATE FILE MANAGEMENT TABLE ? — NO

308

RESPONDS TO REQUESTER

TRANSMITS THE CONTENTS TO REQUESTER

YES

316

314

309 — TRANSMIT FILE MANAGEMENT TABLE UPDATING DATA TO ALL DPUs

END

# F I G. 6

# F I G. 7

PROCESSES BY
MAIN DPU

RECEPTION OF FILE
ACCESS REQUEST
MESSAGE — 701

ACCESS TYPE IS
DATA ADDITION ? — 702 — NO → TO STEPS 310∼316

YES

DETERMINE TO WHICH
DISC OF WHICH DPU DATA
IS STORED — 703 — STORE AT SUB DPU

STORE AT SUB DPU → TRANSFER MESSAGE
TO SUB DPU — 704

STORE AT
MAIN DPU

STEPS 305∼307 — 705

FILE MANAGEMENT
TABLE UPDATING
NECESSARY ? — 706 — NO

YES

UPDATE FILE MANAGE-
MENT TABLE OF
MAIN DPU — 707

END

13

# FIG. 8

```
        ┌──────────────────┐
        │   PROCESSES BY   │
        │     SUB  DPU     │
        └──────────────────┘
                 │
   ┌──────────────────────────┐
   │ RECEPTION OF FILE        │ ～801
   │ ACCESS   REQUEST         │
   │ MESSAGE                  │
   └──────────────────────────┘
                 │
                              ～802
        ╱─────────────────────╲
   ┌───┤   ACCESS TYPE IS      ├── NO ──► TO STEPS 310~316
       ╲   DATA  ADDITION  ?  ╱
        ╲─────────────────────╱
                 │ YES
        ┌──────────────────┐
        │     DISCARD       │ ～803
        │     MESSAGE       │
        └──────────────────┘
                 ┆
        ┌──────────────────┐
        │   RECEPTION  OF   │ ～804
        │     MESSAGE       │
        └──────────────────┘
                 │
        ┌──────────────────┐
        │   STEPS 305~307   │ ～805
        └──────────────────┘
                 │
                              ～806
        ╱─────────────────────╲
  NO ──┤   FILE MANAGEMENT     │
       │   TABLE UPDATING      │
        ╲  NECESSARY   ?      ╱
        ╲─────────────────────╱
   │             │ YES
   │    ┌──────────────────────┐
   │    │ TRANSMIT FILE        │ ～807
   │    │ MANAGEMENT TABLE     │
   │    │ UPDATING DATA TO     │
   │    │ MAIN DPU             │
   │    └──────────────────────┘
   │             │
   └─────────────┤
                 │
        ┌──────────────────┐
        │       END        │
        └──────────────────┘
```